Europäisches Patentamt

European Patent Office

Office Européen des brevets

(19)

(11) Veröffentlichungsnummer: **0 234 525 B1**

(12) # EUROPÄISCHE PATENTSCHRIFT

(45) Veröffentlichungstag der Patentschrift:
02.01.91 Patentblatt 91/01

(51) Int. Cl.$^5$: **B60S 1/40**

(21) Anmeldenummer: 87102445.1

(22) Anmeldetag: 20.02.87

(54) Halterung zum Befestigen eines Wischblatts mit Gelenkbolzen an einem hakenförmigen Wischarm.

(30) Priorität: 26.02.86 FR 8602655

(43) Veröffentlichungstag der Anmeldung:
02.09.87 Patentblatt 87/36

(45) Bekanntmachung des Hinweises auf die
Patenterteilung:
02.01.91 Patentblatt 91/01

(84) Benannte Vertragsstaaten:
DE ES FR GB IT

(56) Entgegenhaltungen:
BE-A- 884 313

(56) Entgegenhaltungen:
FR-A- 2 171 790
FR-A- 2 482 914
FR-A- 2 506 704
FR-A- 2 562 013

(73) Patentinhaber: PAUL JOURNEE S.A.
39, Avenue Marceau
F-92400 Courbevoie (FR)

(72) Erfinder: Renaud, Jean-Pierre
Résidence Bellevue
F-60240 Chaumont en Vexin (FR)

(74) Vertreter: Cohausz & Florack Patentanwälte
Postfach 14 01 61 Schumannstrasse 97
D-4000 Düsseldorf 1 (DE)

## Beschreibung

Die Erfindung bezieht sich auf eine Halterung zum Befestigen eines Wischblatts mittels Gelenkbolzens an einem Wischarm mit einem halbzylindrisch geformten hakenförmigen Ende, wobei die Halterung einen im allgemeinen U-förmigen Teil aufweist, dessen Schenkel seitliche Aussparungen zum Durchführen und Befesigen des Gelenkbolzens umfassen, wobei die Schenkel einen Innenabstand haben, der etwas größer ist als die Breite des hakenförmigen Wischblattendes, und die Schenkel innen über eine rohrförmige, zu den Aussparungen hin offene Nabe verbunden sind, deren Außenradius im wesentlichen gleich dem Innenradius des hakenförmigen Wischblattendes ist, wobei die Innenwand des Bodens des U-förmigen Teils zur Achse der Nabe einen Abstand hat, der im wesentlichen so groß ist, wie der Außenradius des hakenförmigen Wischblattendes, so daß das U-förmige Teil am hakenförmigen Wischblattende drehbar befestigbar ist, wobei die Halterung Mittel umfaßt, um eine Drehung des hakenförmigen Wischblattendes gegenüber dem U-förmigen Teil zu verhindern und wobei die Aussparungen jeweils aus einem Schlitz bestehen, von dem ein Ende in die Kante des Schenkels mündet, in die der Schlitz eingearbeitet ist und dessen anderes Ende in ein Querloch reicht (Siche die FR-A-2 482 914).

Die bekannten Scheibenwischersysteme umfassen einen Schwenkarm, an dem abnehmbar ein Wischblatt befestigt ist. Eins der bekannten Wischarmsysteme hat ein hakenförmig ausgebildetes Ende, an dem das Wischblatt befestigt werden muß.

Ein bekanntes Wischblatt (FR-A 2 572 345) umfaßt deshalb ein Teil, das dazu bestimmt ist, sich der inneren Höhlung des Hakens anzuschmiegen, und an dem ein Schwenkhebel angelenkt ist, der an der Außenfläche des Hakens einrastet. Dieses Wischblatt bietet den Vorteil, seinen Anbau und Abbau zu ermöglichen, ohne den Wischarm dabei anheben oder mehr als nur sehr wenig anheben zu müssen. Es ist aber von komplizierter Bauweise und kann zudem nur mit einer einzigen Wischarmausführung benutzt werden.

Ebenfalls vorgeschlagen (FR-A 2 506 704) wurde die Verwendung eines abnehmbaren, mit dem Wischblatt jedoch eine feste Einheit bildenden Verbindungsstücks. Wenn ein solches Verbindungsstück auch ein Anpassen desselben Wischblatts an verschiedene Wischarme ermöglicht, so bedarf es dabei aber eines starken Anhebens des Wischarms, was nicht immer möglich ist.

Aus der FR-A 2 482 914 ist es bekannt, dem in das U-förmige Teil einzuführenden Wischblattbolzen einen unrunden Querschnitt zu geben, so daß der Bolzen nur in einer bestimmten Drehstellung über den Schlitz in das Querloch einführbar ist. Diese Drehstellung ist nur erreichbar, nachdem der Wischarm stark angehoben wurde. Dies ist nicht nur beim Wechseln des Wischblatts unbequem, sondern hat auch den Nachteil, daß ohne das Wissen darüber, daß ein Anheben erforderlich ist, ein Wechseln nicht möglich ist. Hier haben besonders Laien erhebliche Schwierigkeiten beim Auswechseln. Ein Großteil der Wischblätter wird vom Fahrer und nicht von Kfz-Handwerkern oder Tankstellenwärtern gewechselt.

Aufgabe der Erfidung ist es, eine konstruktiv einfache Halterung für ein Wischblatt so zu verbessern, daß für ein Wechseln des Wischblattes ein stärkeres Anheben des Wischarms nicht erforderlich ist.

Diese Aufgabe wird erfindungsgemäß dadurch gelöst, daß für einen rastenden Halt des Wischblattbolzens im Querloch zwischen dem Schlitz und dem Querloch eine Einschnürung vorgesehen ist.

Eine solche Halterung läßt es zu, daß jeder Laie das Wischblatt wechseln kann, ohne den Wischarm stärker anheben zu müssen. Auch kann der Halter mit anderen Wischarmarten oder -abmessungen verwendet werden.

Vorteilhafterweise konvergiert der Schlitz zum Loch hin. Nach einer weiteren Ausführungsform umfassen diese Mittel zur Herstellung einer festen Verbindung einen Buckel an der Innenfläche mindestens einer der genannten Flächen. Vorzugsweise besteht das genannte Teil aus elastisch verformbaren Kunststoff.

In einer Ausführungsvariante der Erfindung sind die beiden genannten Flächen miteinander durch eine Querbrücke verbunden, die das Ganze verstärkt und sich auf den Haken abstützt.

Nach einer Ausführungsform der Erfindung weisen die Flächen jeweils eine Öffnung mit gerundetem Boden auf, die nach vorn geöffnet ist.

Die Erfindung wird gut verständlich beim Lesen der folgenden Beschreibung unter Bezugnahme auf die beigeheftete Zeichnung, in der

- die Figuren 1 bis 4 die verschiedenen Anbauphasen einer Halterung nach einem Ausführungsbeispiel der Erfindung schematisch veranschaulichen ;

- Figur 5 ist eine Seitenansicht einer Variante der Erfindung, und

- Figur 6 ist eine Draufsicht der Halterung in Figur 5

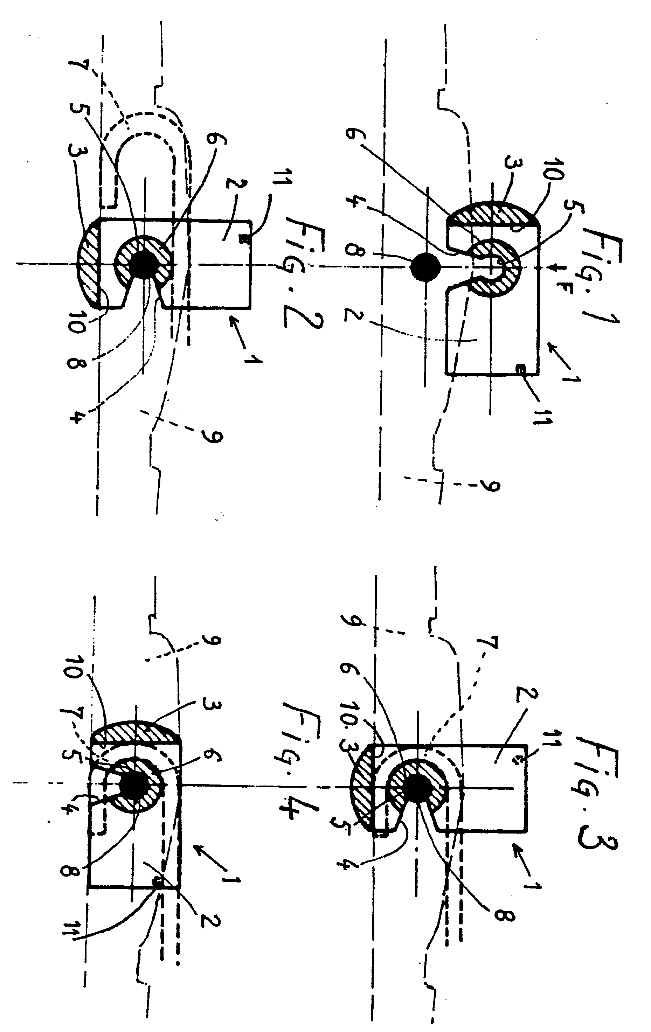

Zunächst sei auf Figuren 1 bis 4 verwiesen. Die Halterung besteht aus einem Teil 1 in genereller U-Form mit zwei Seitenflächen bzw. Schenkeln 2, die durch einen Boden 3 verbunden sind. Die Schenkel 2 haben jeweils einen Schlitz 4 mit schrägen Rändern und Anschluß an ein Querloch 5, dessen Durchmesser größer ist als der Abstand der Ränder des Schlitzes 4 am Anschluß.

Die Schenkel 2 sind außerdem über eine Hohlnabe 6 verbunden, deren Außenradius im wesent-

2

lichen gleich dem Innenradius des hakenförmigen Wischblattendes 7 ist, an dem sie angebracht werden soll, wobei ihre innere Aussparung in der Verlängerung der Löcher 5 der Schenkel 2 des Teils 1 liegt. Der Radius dieser inneren Aussparung ist im wesentlichen gleich dem Radius des Bolzens 8 des Wischblatts 9. Die Nabe ist in der Axialverlängerung der Schlitze 4 offen.

Der Boden 3 des Teils 1 hat an seiner Innenfläche 10 zur Achse der Nabe 6 einen Abstand der im wesentlichen gleich dem Außenradius des Wischblattenes 7 ist. Das Teil 1 besteht aus elastisch verformbarem Kunststoff.

Das Teil 1 wird auf den Bolzen 8 des Wischblatts 9 in Richtung des Pfeils F gedrückt und rastet in den Löchern 5 und der inneren Aussparung der Nabe 6 durch elatisches Spreizen der an der Verbindungsstelle der Schlitze 4 und ihrer Verlängerung in die Nabe 6 gebildeten Lippen ein. Die Nabe 6 kann zwecks Erleichterung dieser elastischen Verformung geteilt sein, d.h. aus zwei Nabenabschnitten gebildet werden, die jeweils der Innenwand einer der Schenkel 2 des Teils 1 anliegen.

Nach dem Einrasten des Teils 1 am Bolzen 8 wird es so gedreht, daß sein Boden 3 nach unten weist (Fig. 2), und dann das Wischblattende 7 zwischen die Schenkel 2 eingeführt, deren Innenabstand etwas größer ist als die Breite des Wischblattendes 7.

Sodann wird das Wischblatt 9 so eingeschoben, daß die Nabe 6 in das Wischblattende 7 zu sitzen kommt (Fig. 3). Dann wird das Teil 1 gedreht, und zwar so, daß die Innenfläche des Bodens 3 sich am äußeren Umfang des Wischblattendes 7 abstützt (Fig. 4). Dabei stützen sich Buckel als Anschläge 11 der Innenwand jedes Schenkels 2 unter dem Wischblattende 7 so ab, daß das Wischblatt 9 in bezug auf das Wischblattende 7 verriegelt ist, sich aber um seinen Bolzen 8 drehen kann ; die Halterung 1 also in bezug auf Wischblattende 7 in Drehung fest verbunden ist.

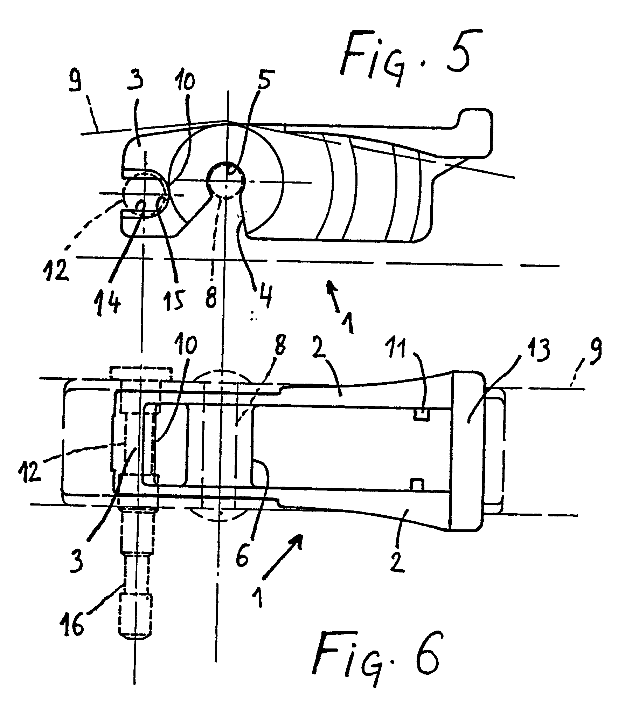

Jetzt sei auf die Figuren 5 und 6 verwiesen, in denen die Halterung nach dieser Variante als an einer Querachse 12 montiert dargestellt ist. Die Schenkel 2 der Halterung sind über eine Querbrücke 13 verbunden. Zudem weisen die Schenkel 2 vorn jeweils eine Öffnung 14 mit gerundetem Boden 15 auf, die sich nach vorn öffnet. Da die Halterung 1 auf den Bolzen 8 des Wischblatts 9 geklemmt ist, umfaßt die zwischen Öffnungen 14 eingeschlossene Querachse 12 einen vorstehenden Teil 16, der zur Befestigung an einen bekannten Wischarm (nicht dargestellt) mit einer Queröffnung dient.

## Ansprüche

1. Halterung zum Befestigen eines Wischblatts (9) mittels Gelenkbolzens (8) an einem Wischarm mit einem halbzylinderisch geformten hakenförmigen Ende, wobei die Halterung einen im allgemeinen U-förmigen Teil (1) aufweist, dessen Schenkel (2) seitliche Aussparungen zum Durchführen und Befestigen des Gelenkbolzens (8) umfassen, wobei die Schenkel (2) einen Innenabstand haben, der etwas größer ist, als die Breite des hakenförmigen Wischblattendes (7), und die Schenkel (2) innen über eine rohrförmige, zu den Aussparungen hin offene Nabe (6) verbunden sind, deren Außenradius im wesentlichen gleich dem Innenradius des hakenförmigen Wischblattendes (7) ist, wobei die Innenwand (10) des Bodens (3) des U-förmigen Teils (1) zur Achse der Nabe (6) einen Abstand hat, der im wesentlichen so groß ist, wie der Außenradius des hakenförmigen Wischblattendes (7), so daß das U-förmige Teil (1) am hakenförmigen Wischblattende (7) drehbar befestigbar ist, wobei die Halterung Mittel umfaßt, um eine Drehung des hakenförmigen Wischblattendes gegenüber dem U-förmigen Teil (1) zu verhindern und wobei die Aussparung jeweils aus einem Schlitz (4) bestehen, von dem ein Ende in die Kante des Schenkels (2) mündet, in die der Schlitz eingearbeitet ist und dessen anderes Ende in ein Querloch (5) reicht, **dadurch gekennzeichnet,** daß für einen rastenden Halt des zylindrischen Wischblattbolzens (8) im Querloch (5) zwischen dem Schlitz (4) und dem Querloch (5) eine Einschnürung vorgesehen ist.

2. Halterung nach Anspruch 1, **dadurch gekennzeichnet,** daß der Schlitz (4) zum genannten Loch (5) hin konvergiert.

3. Halterung nach einem der vorherigen Ansprüche, **dadurch gekennzeichnet,** daß die Nabe (6) aus zwei Nabenabschnitten besteht, die jeweils an der Innenwand einer der Seitenflächen (2) anliegen.

4. Halterung nach einem der vorherigen Ansprüche, **dadurch gekennzeichnet,** daß die Mittel für eine feste Verbindung einen Buckel (11) an der Innenfläche mindestens einer der Flächen (2) umfassen.

5. Halterung nach einem der vorherigen Ansprüche, **dadurch gekennzeichnet,** daß die Flächen (2) über eine Querbrücke (13) miteinander verbunden sind.

6. Halterung nach einem der vorherigen Ansprüche, **dadurch gekennzeichnet,** daß das Teil (1) aus elastisch vorformbaren Kunsstoff besteht.

7. Halterung nach einem der vorherigen Ansprüche, **dadurch gekennzeichnet,** daß die Flächen (2) jeweils eine nach vorn offene Öffnung (14) mit gerundetem Boden (15) aufweisen.

## Claims

1. A clamp for fastening a wiper blade (9), by means of a pivot pin (8), to a wiper arm having a semi-cylindrical hooked end, wherein the clamp comprises a generally Ushaped member (1), the shank portions (2) of which define lateral openings for the insertion and fastening of the pivot pin (8), the shank portions (2) having an inward offset which is somewhat larger than the width of the hooked end (7) of the wiper blade, an inner part of the shank portions (2) being fastened over a tubular hub (6) which is open to the said openings, with the outer radius of the hub being substantially similar to the inner radius of the hooked end (7) of the wiper blade, wherein the inner wall (10) of the base portion (3) of the U-shaped member (1) defines an offset from the axis of the hub (6), this offset being of substantially the same magnitude as the outer radius of the hooked end (7) of the wiper blade so that the U-shaped member (1) is rotatably secured to the hooked end (7) of the wiper blade, whereby the clamp constitutes means for preventing a rotation of the hooked end of the wiper blade with respect to the U-shaped member (1), and wherein each said opening comprises a slot (4) one end of which is joined to the edge of the shank portion (2) in which the slot is formed, with its other end comprising a through hole (5), characterised in that a constriction is provided between the slot (4) and the through hole (5) for retention of the cylindrical wiper blade pivot pin (8) in the through hole (5).

2. A clamp according to Claim 1, characterised in that the slot (4) is convergent towards the said hole (5).

3. A clamp according to one of the preceding Claims, characterised in that the hub (6) comprises two hub segments which engage respectively on the inner wall of one of the side surfaces (2).

4. A clamp according to one of the preceding Claims, characterised in that the secure fastening means comprise a projection (11) on the inner surface of at least one of the shank portions (2).

5. A clamp according to one of the preceding Claims, characterised in that the shank portions (2) are secured to each other by means of a transverse bridge (13).

6. A clamp according to one of the preceding Claims, characterised in that the member (1) is made from resiliently deformable plastics material.

7. A clamp according to one of the preceding Claims, characterised in that the shank portions (2) each include an opening (14), open to the front and having rounded edges (15).

**Revendications**

1. Attache pour la fixation d'un balai d'essuie-glace (9) au moyen d'un axe d'articulation (8) à un bras d'essuie-glace à extrémité en forme de crochet semi-cylindrique, l'attache présentant une partie (1) de forme générale en U dont les faces (2) latérales comportent des évidements pour le passage et la fixation de l'axe d'articulation (8), lesdites faces (2) ayant un écartement intérieur légèrement supérieur à la largeur de l'extrémité (7) en forme de crochet et lesdites faces (2) étant raccordées intérieurement par un moyen creux (6) et ouvert aux évidements dont le rayon extérieur est sensiblement identique au rayon intérieur de l'extrémité (7) en forme de crochet, la paroi intérieure (10) du fond (3) de la pièce (1) en forme de U étant à distance de l'axe du moyeu (6) sensiblement égale au rayon extérieur de l'extrémité (7) en forme de crochet de manière à ce que la pièce (1) en forme de U soit fixée en rotation sur l'extrémité (7) en forme de crochet, l'attache comprenant des moyens de solidarisation en rotation de l'extrémité en forme de crochet à l'encontre de la partie (1) en forme de U et les évidements sont constitués chacun par une fente (4) dont une extrémité débouche sur un bord de la face (2) dans laquelle est pratiquée la fente et dont l'autre extrémité débouche dans un trou (5), caractérisée en ce qu'un étranglement est prévu entre la fente (4) et le trou (5) pour un maintien cranté de l'axe d'articulation (8) dans le trou (5).

2. Attache selon la revendication 1, caractérisée par le fait que la fente (4) est convergente vers ledit trou (5).

3. Attache selon l'une des revendications précédentes, caractérisée par le fait que le moyeu (6) est constitué de deux bouts de moyeu adjacents chacun à la paroi intérieure d'une des faces latérales (2).

4. Attache selon l'une des revendications précédentes, caractérisée par le fait que les moyens de solidarisation comprennent un bossage (11) sur la face intérieure d'au moins une des faces (2).

5. Attache selon l'une des revendications précédentes, caractérisée par le fait que les faces (2) sont reliées entre elles par un pont transversal (13).

6. Attache selon l'une des revendications précédentes, caractérisée par le fait que la pièce (1) est en matière synthétique déformable élastiquement.

7. Attache selon l'une des revendications précédentes, caractérisée par le fait que les faces (2) comportent chacune une ouverture (14) à fond arrondi (15) débouchant à l'avant.

Fig. 1

Fig. 2

Fig. 3

Fig. 4

Fig. 5

Fig. 6